# EUROPEAN PATENT APPLICATION

(11) **EP 1 215 268 A2**
(43) Date of publication of application: **19.06.2002**
(21) Application number: 01130100.9
(22) Date of filing: 18.12.2001
(51) Int. Cl.: C09K 11/08

(54) **Coated electroluminescent phosphor**

(30) Priority: 18.12.2000 US 256282 P; 20.09.2001 US 957181
(71) Applicant: OSRAM SYLVANIA INC., Danvers, MA 01923 (US)
(72) Inventor: Gingerich, Richard G.W., Towanda, PA 18848 (US)
(74) Representative: Grünecker, Kinkeldey, Stockmair & Schwanhäusser Anwaltssozietät

(57) **Abstract**

An electroluminescent phosphor comprised of particles of phosphor material, substantially each particle thereof having a coating of magnesium fluoride thereon. The phosphor is coated from a solution of magnesium acetate, trifluoroacetic acid and isopropyl alcohol.

## Description

This application claims priority from Provisional Patent Application No. 60/256,282, filed 12/18/00.

### TECHNICAL FIELD

This application relates to electroluminescent phosphors and more particularly to such phosphors coated with a life-extending coating whereby the half-life of the phosphor is extended and a more economical electroluminescent lamp can be produced.

### BACKGROUND ART

Phosphors are a known class of materials that emit electromagnetic radiation, usually in the visible region of the spectrum, upon excitation by another form of energy. Phosphors are usually named for the type of energy to which they susceptible. For example, cathodoluminescent phosphors are excited to emission by impingement of electrons or cathode rays; photoluminescent phosphors are excited to emission by impingement of actinic radiation; x-ray phosphors by the impingement of x-rays; and electroluminescent phosphors by the action of an electric field, usually supplied by an alternating current. It is with the latter type of phosphor that this invention is most particularly concerned.

Commercial electroluminescent phosphors are mostly based upon a host material of zinc sulfide activated by one or more activators among which are copper and/or manganese and/or chloride, which are incorporated into the host structure. These phosphors have uses as lamps or illuminating sources for readout devices or watch faces. Two basic kinds are employed, one in which the phosphor is dispersed in an organic binder and laminated in plastic, and a second variety in which the phosphor is dispersed in a ceramic dielectric and fused to a metal plate.

The plastic variety is the more economical; however, the light output of the phosphor encased in an economical plastic such as Mylar™ degrades rapidly, such phosphors having a half-life of about 50 hours at operation at 400 Hz and 100 volts. (The half-life of a phosphor is that point in time when its light output is reduced by half from its initial light output). Incorporation of the phosphor in a more expensive plastic lamina such as Aclar™ will produce a lamp having much better life (for example, a half-life of 500 to 2000 hours at operating levels of 400 Hz and 100 volts) with, however, a concomitant increase in the cost of the lamp.

Accordingly, it would be an advance in the art if a phosphor could be developed to provide a greater half-life in the more economical plastic material.

### DISCLOSURE OF INVENTION

It is, therefore, an object of this invention to obviate the disadvantages of the prior art.

It is a further object of the invention to enhance the operation of electroluminescent lamps.

These objects are accomplished, in one aspect of the invention, by the provision of an electroluminescent phosphor comprised of particles of phosphor, substantially each particle thereof having a coating of magnesium fluoride thereon.

### BEST MODE FOR CARRYING OUT THE INVENTION

For a better understanding of the present invention, together with other and further objects, advantages and capabilities thereof, reference is made to the following disclosure and appended claims.

Referring now to the invention with greater particularity, an electroluminescent phosphor is prepared having a magnesium fluoride coating thereon, which phosphors, when made into a lamp employing Mylar™ as a lamina, had a half life more than 2 and ½ times greater than a similar phosphor without the coating. The particulars are shown in Table I.

**TABLE I**

| Lot Number | Description | Color | | Light Output Hr-Ft 24 L | Half-Life Hours | Efficacy Lm/Watt |
|---|---|---|---|---|---|---|
| | | X | Y | | | |
| ELB-655 | Control | 0.179 | 0.389 | 29.2 | 60 | 2.11 |
| 34695-96 | MgF₂ | 0.197 | 0.465 | 12.5 | 166 | 3.22 |

The coated phosphor was prepared from a batch of Sylvania type 723 electroluminescent phosphor. This phosphor is available from Osram Sylvania Inc., Towanda Pennsylvania, and comprises zinc sulfide activated with copper (ZnS:Cu). The batch was divided into two portions. A first portion was made into lamps with a Mylar™ lamina and used as a Control. It is shown in Table I as Lot Number ELB-655. The second portion was coated with magnesium fluoride. It is shown in Table I as Lot Number 34695-96.

The coated phosphor was prepared as follows:

To a 100 ml beaker equipped with a 1" (2.54 cm) magnetic stir bar the following materials were added in succession:
1.08 gm (0.005 mole) of magnesium acetate, Mg (C₂H₃O₂)₂, (Fisher, ACS Grade);
15 ml of isopropyl alcohol, CH₃CH(CH₃)OH, (Fisher, ACS Grade); and
2 ml of trifluoroacetic acid, CF₃COOH (Aldrich, Lot 09923 JU).

The mixture was stirred for two hours at ambient conditions. 20.01 gm of the Sylvania type 723 (from Lot Number ELB-655) was added to the beaker and stirred for 30 minutes. The resultant suspension was added to a 4" (11 cm) crystallization dish and allowed to evaporate for 48 hours. The solids were then placed in a silica boat and fired in air at 325°C for 10 minutes and then screened through a -325 mesh stainless steel screen to yield 20.25 gm of magnesium fluoride coated phosphor. This phosphor was designated Lot Number 34695-96 and was made into lamps utilizing similar Mylar™ laminar and the results of testing are shown in Table I. As seen from Table I the resulting phosphor had a significant life improvement over the untreated phosphor when similar laminations were utilized. The color shift was within acceptable limits and the phosphor showed not only an improvement in life but an improvement in efficacy as well.

A similar coating procedure was described by M. Tada, S. Fujihara and T. Kimura in the Journal of Materials Research, 14, 1610 (1999) wherein alkaline earth and rare earth fluoride thin films were deposited on silica glass substrates by a sol gel process using trifluoroacetic acid as a fluorine source.

While there have been shown and described what are at present considered to be the preferred embodiments of the invention, it will be apparent to those skilled in the art that various changes and modification can be made herein without departing from the scope of the invention as defined by the appended claims.

## Claims

1. A coated electroluminescent phosphor comprised of particles of phosphor material, substantially each particle thereof having a coating of magnesium fluoride thereon.

2. The phosphor of Claim 1 wherein said coated phosphor has a half-life expectancy greater than 2 times that of a similar uncoated phosphor.
